# EUROPEAN PATENT SPECIFICATION

(11) **EP 2 330 754 B1**
(45) Date of publication and mention of the grant of the patent: **08.02.2012**
(21) Application number: 09290899.5
(22) Date of filing: 03.12.2009
(51) Int. Cl.: H04B 7/04, H04B 7/06, H04L 1/06

(54) **Wireless communications device and method of operating a wireless communications device**
Drahtlose Kommunikationsvorrichtung und Verfahren zum Betrieb einer drahtlosen Kommunikationsvorrichtung
Dispositif de communications sans fil et procédé pour l'opération d'un dispositif de communications sans fil

(43) Date of publication of application: 08.06.2011
(73) Proprietor: Alcatel Lucent, 75008 Paris (FR)
(72) Inventor: Mayer, Hans-Peter, 71254 Ditzingen (DE); Wild, Thorsten, 70435 Stuttgart (DE)
(74) Representative: Schmidt, Werner Karl

(56) References cited:
- WO-A1-2008/082206
- US-A1- 2008 080 632

## Description

### Field of the Invention

The present invention relates to a wireless communications device comprising a communications interface configured to perform multiple-input multiple-output, MIMO, wireless data transmission with at least one further device.

The present invention further relates to a method of operating a wireless communications device comprising a communications interface configured to perform MIMO wireless data transmission with at least one further device.

### Background

US 2008/080632 A1 discloses a method for generating precoder data, comprising: obtaining transmit power data indicative of a transmit power of a plurality of multiple-input/multiple-output signals; obtaining signal quality data, the signal quality data including at least one measure of a quality of the plurality of multiple-input/multiple-output signals; obtaining channel data with respect to a wireless channel, the channel data including a measure of respective channel parameters of each of a plurality of channel paths in the wireless channel; constraining one or more system performance parameters; and determining first and second precoder diagonal values based on the signal quality data, the transmit power data, the channel data, and the one or more constrained system performance parameters.

WO 2008/082206 A1 discloses a method and apparatus for transmitting and receiving a control channel message in a MIMO mobile communication system, in which a control channel message generator generates a pilot/MIMO field indicating at least one of a pilot format, a MIMO transmission rank being a number of transmission layers for transmitting encoded packet streams, and precoding information for MIMO data transmission, and outputs a control channel message including the pilot/MIMO field, and transmission module converts the control channel message to radio signal and transmits the radio signal to an MS.

Prior art communications devices capable of MIMO transmissions employ a fixed codebook which comprises a plurality of precoding matrices that may be employed for precoding data prior to transmitting it over a MIMO channel. The precoding is inter alia used for compensating adverse effects of the time-variant MIMO channel on the data transmission. Different MIMO channel conditions are dealt with by choosing a specific precoding matrix out of said codebook which suits the current MIMO channel conditions. Since prior art codebooks only comprise a limited number of codebook entries, i.e. precoding matrices, each of which has pre-computed constant matrix entries, conventional communications devices cannot offer optimal precoding for all possible conditions of a MIMO channel.

### Summary

Accordingly, there is a need to provide an improved wireless communications device and method of operating a wireless communications device which enable efficient precoding for any possible MIMO channel condition.

According to the present invention, regarding the abovementioned communications device, this object is achieved by the wireless communications device being configured to:
- modify at least one entry of a predefined precoding matrix which is used by said communications device and/or said further device to precode data for said MIMO data transmission thus obtaining a modified precoding matrix,
- determine a quality measure of a MIMO transmission associated with said modified precoding matrix, and to
- signal feedback information to said further wireless communications device depending on said determined quality measure.

The inventive modification of at least one entry of a precoding matrix advantageously enables to adapt said precoding matrix to actual precoding requirements which correlate to current MIMO channel conditions.

In contrast to prior art systems, which only provide for fixed codebooks that have several different precoding matrices with pre-computed constant matrix entries, the inventive solution enables a precise tuning of conventional, existing precoding matrices by altering only single matrix elements. Thus, precoding efficiency can greatly be improved as compared to conventional systems which only allow to switch between a few, constant precoding matrices of the fixed codebook.

For instance, due to the possibility of altering only one or a few matrix entries of an existing precoding matrix in the course of the inventive method step of modifying, a precoding matrix may individually and efficiently be optimized for a specific MIMO channel by fine-tuning said specific matrix entries in contrast to just choosing another existing pre-computed precoding matrix that is not optimally suited for the current MIMO channel, either.

The inventive determination of a quality measure of a MIMO transmission associated with said modified precoding matrix advantageously enables to assess the effects of the inventive modification of the precoding matrix and thus to determine whether the modification leads to an improved precoding process or not.

As a further aspect of the present invention, depending on said quality measure, feedback information may be signalled to the further wireless communications device which enables a coordination of the further MIMO data transmission with the inventive communications device depending on the results of the inventive modification of the precoding matrix.

According to a preferred embodiment, a particularly precise modification of the precoding matrix can be attained if said communications device is configured to alter one or more specific entries of the precoding matrix by adding a predetermined increment to a phase and/or amplitude of said one or more specific entries.

Since each matrix entry of a precoding matrix can usually be represented by a complex number, it is particularly advantageous to provide such predetermined increments for the amplitude and/or phase. Moreover, employing predetermined increments also requires a comparatively small amount of signaling data for identifying the increments, which is useful if information defining an actually performed matrix modification is to be signaled to a further device.

Alternatively or in addition to adding predetermined amplitude and/or phase increments, the matrix entry or entries may also be modified by multiplication and/or any other suitable arithmetic operation.

The inventive modification of an existing matrix element in the sense of the present invention may also comprise replacing said matrix element with a predetermined value that is independent of the current value of said matrix element. Such replacement value may be determined depending on one or more other matrix entries of the precoding matrix and/or randomly and/or according to any predetermined principle.

According to a further preferred embodiment, said communications device is configured to signal information related to the modification of the precoding matrix to said further device only if said determined quality measure associated with said modified precoding matrix exceeds a predetermined threshold value, whereby signalling overhead is avoided especially in such cases, where the inventive modification of the precoding matrix does not yield any improvements. In such cases, the modified precoding matrix may rather be discarded or may be further modified by the inventive communications device.

The inventive communications device may - according to a further embodiment - also be configured to repeat the steps of modifying at least one entry of a precoding matrix and determining the quality measure of a MIMO transmission associated with said modified precoding matrix in order to enable an iterative adaptation and improvement of the precoding matrix or the whole codebook, respectively.

Although the present invention is not limited to such specific configuration, it is possible to provide the inventive communications device in form of a mobile terminal of a cellular communications system such as according to the 3GPP, 3rd Generation Partnership Project, LTE (Long Term Evolution)- or LTE-Advanced standard. Correspondingly, a further device suitable for MIMO data transmission with the inventive communications device may be configured as a base station according to the 3GPP LTE-or LTE-Advanced standard, e.g. as a so-called eNodeB.

Advantageously, the inventive principle is applicable both to uplink and downlink data transmissions in the context of the cellular communications system.

Moreover, apart from the field of cellular communications systems, the inventive communications device may also be provided in form of any other type of device capable of establishing a MIMO data transmission with a further device, for instance an IEEE 802.11n (WLAN, wireless local area network) or IEEE 802.16 (WiMAX, worldwide interoperability for microwave access) standard compatible device.

According to a preferred embodiment, wherein said communications device is a mobile terminal of a cellular communications network, said communications device is configured to modify at least one precoding matrix of a codebook provided by a base station of said cellular communications network. According to this embodiment, the feedback information which is signalled from the mobile terminal to the base station comprises at least one of information characterising the type of modification and/or information characterising the determined quality measure associated with said modification. This way, the mobile terminal can notify the base station of successful modifications to the precoding matrix and the achieved quality improvements. On the basis of such feedback information, the base station may decide to apply the modifications to the precoding matrix signalled by the mobile terminal for future downlink communications. According to a preferred embodiment, the application of the inventive principle in the context of a mobile terminal does not necessarily imply a real-time modification of an instance of the precoding matrix that is currently used by the base station for precoding. The mobile terminal rather uses a local copy of the precoding matrix for conducting the inventive step(s) of modification. Thus, the inventive modifications do not affect an ongoing data transmission.

According to a further embodiment, the communications device which is configured as a mobile terminal of a cellular communications network, is further configured to estimate a receive signal to interference plus noise ratio, SINR, depending on said modified precoding matrix. The estimated receive SINR may be used as a quality measure of the MIMO transmission in the sense of the present invention, which enables an efficient assessment of any improvements induced by the inventive modification of a precoding matrix.

For determining a receive SINR based on its local, modified precoding matrix, the mobile terminal may e.g. measure a raw MIMO channel matrix according to per se known procedures employing downlink transmissions of common pilot signals or cell-specific reference symbols. After having determined the current raw MIMO channel matrix, the mobile terminal may obtain an effective channel matrix by performing a matrix multiplication of the raw MIMO channel matrix with the modified precoding matrix. From this effective channel matrix, the mobile terminal can derive optimal receive weights, which is a procedure well known in the art. Based on the optimal receive weights, the mobile terminal may determine the receive SINR to obtain a quality measure for assessing the effect of the inventive modification of the precoding matrix.

According to a further embodiment, said communications device is configured to determine an interference level that is caused by transmissions from a base station to a co-scheduled interferer which uses the same transmission resources (time and/or frequency and/or code resources) as the communications device, to modify transmit weights of the base station used for said transmissions to said co-scheduled interferer, to determine an estimated interference level resulting from the modification of said transmit weights for said co-scheduled interferer, and to notify the base station of said cellular communications network. By modifying the transmit weights for the co-scheduled interferer, the inventive communications device may employ the inventive principle of iterative adaptation of a precoding matrix with a further aim, namely to find transmit weights for the interferer which effect a minimum possible interference level for the communications device itself. Such transmit weights may be signalled to the respective base station.

According to a further preferred embodiment of the present invention, the functionality of the inventive communications device is implemented in a base station of a cellular communications network. According to this configuration, said communications device is configured to modify at least one of its precoding matrices, to receive quality information associated with said modified precoding matrix from at least one mobile terminal of said cellular communications network, and to determine said quality measure by evaluating said received quality information.

In contrast to the implementation of the inventive functionality to a mobile terminal, which performs a local simulation of an application of a modified precoding matrix that can also be regarded as a process of testing a hypothesis (e.g., modified precoding matrix yields improved SINR) prior to requesting the use of such modified precoding matrix from a base station, the inventive base station may directly alter matrix elements of the precoding matrix that is currently used for a downlink MIMO transmission to one or more mobile terminals. I.e., the inventive modification of matrix elements as performed by the base station which incorporates the inventive functionality can directly affect a downlink data transmission. This has the advantage that no simulation has to be conducted to obtain the inventive quality measure. The inventive quality measure may rather be derived from quality information associated with said modified precoding matrix which is received by the base station from at least one mobile terminal. Of course, an inventive base station may also, i.e. alternatively or additionally, perform a simulation including the inventive modification of the codebook and an estimation of a resulting quality measure.

According to a preferred embodiment, the communications device is configured to receive quality information associated with at least one modified precoding matrix from a plurality of mobile terminals and to optimize said at least one precoding matrix depending on said quality information.

The inventive base station may e.g. conduct an optimization process which comprises probing a plurality of differently modified precoding matrices for a predetermined time. After said probing, the respective quality information received from the mobile terminals may be evaluated and the base station may choose to use a specific modified precoding matrix which yielded positive quality information by a plurality of mobile terminals.

If the quality information received from the mobile terminals also comprises information on an receive SINR change at the mobile terminals, the inventive optimization process within the base station may also provide steps of determining which of the probed modified precoding matrices leads to a global optimum regarding overall cell throughput and/or cell edge user rate.

According to a further embodiment, said communications device is configured to notify at least one mobile terminal of a modification to a precoding matrix W_tx by signalling feedback information to said mobile terminal. By doing so, the inventive base station can notify mobile terminals of a change in a precoding matrix so that the mobile terminals may update their respective copy of the involved precoding matrix for future MIMO data transmission. The step of signalling feedback information to said mobile terminal may also be referred to as "feed forward" signalling as seen from the base station, because the signalling is conducted in the downlink direction in this specific embodiment.

A further aspect of the present invention is represented by a method of operating a wireless communications device comprising a communications interface configured to perform MIMO wireless data transmission with at least one further device.

The inventive method comprises the following steps:
- modifying at least one entry of a predefined precoding matrix which is used by said communications device and/or said further device to precode data for said MIMO data transmission thus obtaining a modified precoding matrix,
- determining a quality measure of a MIMO transmission associated with said modified precoding matrix, and
- signalling feedback information to said further wireless communications device depending on said determined quality measure.

The inventive method may be performed by base stations and/or mobile terminals of cellular communications systems, e.g. according to the LTE- or LTE-Advanced standard, and by any other communications devices capable of establishing a MIMO data transmission with a further device. Such devices may e.g. be IEEE 802.11n (WLAN) or IEEE 802.16 (WiMAX) standard compatible devices.

Further advantageous embodiments are given by the dependent claims.

### Brief Description of the Figures

Further features, aspects and advantages of the present invention are given in the following detailed description with reference to the drawings in which:
- Figure 1: depicts a schematic block diagram of an embodiment of a wireless communications device according to the present invention,
- Figure 2: depicts a MIMO data transmission scenario between the communications device according to Figure 1 and a further device,
- Figure 3: depicts a flow-chart of an embodiment of the method according to the present invention,
- Figure 4: depicts an embodiment of the inventive process of modifying a precoding matrix,
- Figure 5: depicts a further MIMO data transmission scenario including an interferer,
- Figure 6: depicts a further MIMO data transmission scenario with a base station comprising functionality according to an embodiment of the invention,
- Figure 7: depicts a communications process according to an embodiment of the inventive method, and
- Figure 8: depicts a flow-chart of a further embodiment of the inventive method.

### Description of the Embodiments

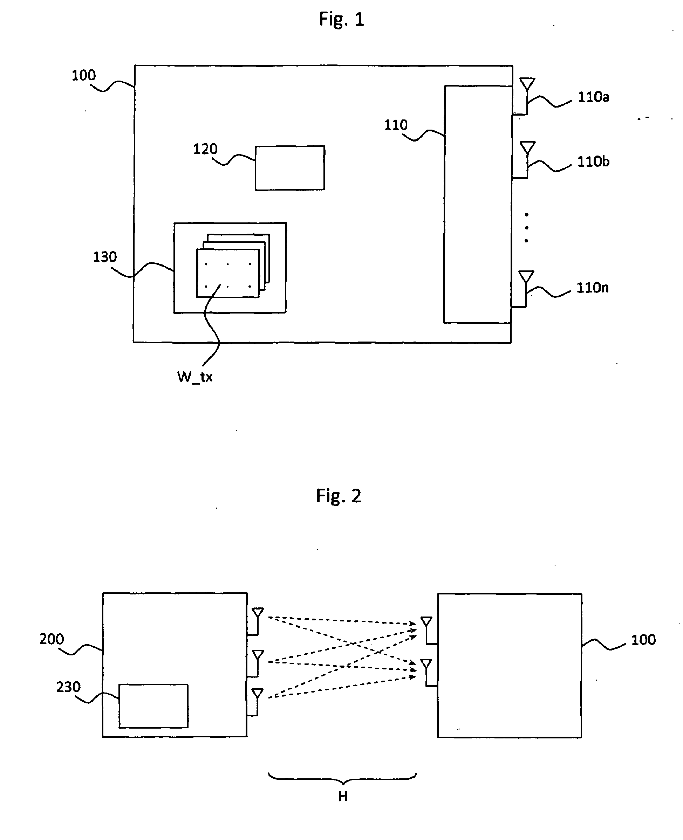

Figure 1 depicts a schematic block diagram of a first embodiment of the inventive wireless communications device 100. The communications device 100 comprises a communications interface 110 which is configured to perform multiple-input multiple-output, MIMO, wireless data transmission with at least one further device and may thus also be denoted as MIMO transceiver.

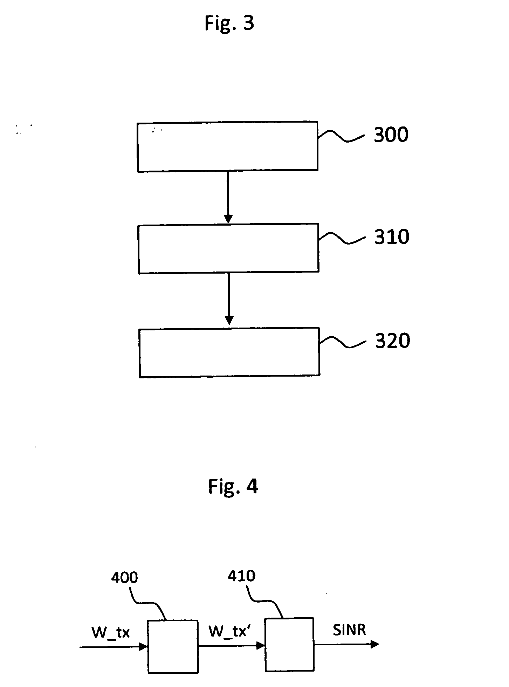

The MIMO transceiver 110 is equipped with a plurality of antennas 110a, 110b, .., 110n, where n >= 1. An operation of the communications device 100 and particularly of said MIMO transceiver 110 is controlled by the control device 120 that may comprise processor means such as a microcontroller, a digital signal processor (DSP) or a programmable logic circuit and the like. The control device 120 is configured to perform the inventive method disclosed below with reference to Figure 3.

As can be seen from Figure 2, which depicts a typical MIMO data transmission scenario, the further device 200, too, comprises a plurality of antennas.

In the sense of the present invention, the term "MIMO" is considered to also comprise SIMO, single input multiple output, and MISO, multiple input single output, configurations. Insofar, the communications interface 110 (Figure 1) of the inventive communications device 100 may also comprise only one single antenna 110a, i.e. n = 1. Nevertheless, a MIMO data transmission in the sense of the present invention may be performed, as long as the further device 200 comprises more than one antenna.

For the present example scenario according to Figure 2, it is assumed that the inventive communications device 100 comprises two antennas and that the further device 200, which is also a MIMO-capable device in the sense of the present invention, comprises three antennas.

Thus, in total, six different sub-channels may exist in the context of the MIMO data transmission between the devices 100, 200. Correspondingly, a raw MIMO channel matrix H, which characterizes the MIMO data transmission channel between the devices 100, 200, comprises six entries each of which denotes a specific MIMO sub-channel between one antenna of said further device 200 and one antenna of said inventive communications device 100.

Although a first aspect of the present invention is explained in detail with focus on the functionality of the communications device 100, it is to be noted that the further device 200 may comprise a similar structure and functionality as the device 100.

Furthermore, although the invention is not limited to such specific configuration, for the further explanation of a first aspect of the present invention it is assumed that the communications device 100 is a mobile terminal of a cellular communications system such as according to the 3GPP, 3rd Generation Partnership Project, LTE (Long Term Evolution)- or LTE-Advanced standard. Correspondingly, the further device 200 may be configured as a base station according to the 3GPP LTE- or LTE-Advanced standard, e.g. as a so-called eNodeB.

Alternatively, the inventive communications device 100 may also constitute any other type of device capable of establishing a MIMO data transmission with a further device 200, for instance an IEEE 802.11n (WLAN) or IEEE 802.16 (WiMAX) standard compatible device.

In order to improve the MIMO data transmission between the communications device 100 and the base station 200, the inventive communications device 100 performs the method steps explained hereafter with reference to the flow-chart of Figure 3.

In a first step 300 of the inventive method, the communications device 100 modifies at least one entry of a precoding matrix W_tx. In the context of the present embodiment, where the device 200 represents a base station of a cellular communications system, the precoding matrix W_tx is used by the base station 200 to precode data for a MIMO data transmission to the device 100. More specifically, precoding is performed to compensate for undesired effects of the MIMO data transmission as defined by the MIMO channel matrix H and/or to attain specific beam forming schemes of the employed multi-antenna arrangements. The precoding matrix W_tx is usually selected by the base station 200 from a collection of different predefined precoding matrices also referred to as a codebook. Said codebook 130, 230 may be stored both to the base station 200 and the communications device 100. Thus, if the base station 200 or the communications device 100 desires to use another precoding matrix, i.e. to account for a change in the MIMO channel matrix H (Figure 2), the respective device 100, 200 may provide the other device 200, 100 with signaling information defining which specific precoding matrix to use for future data transmission.

However, as conventional systems only provide fixed codebooks with a limited number of constant, predetermined precoding matrices, there is only few flexibility for providing suitable precoding schemes for a variety of different application scenarios and possible types of MIMO channel matrices H.

Thus, by modifying 300 at least one entry of a precoding matrix W_tx, which is, according to the present embodiment, used by the base station 200 to precode data for said MIMO data transmission to the terminal 100, the inventive communications device 100 improves an overall flexibility regarding the MIMO data transmission between the devices 100, 200. By altering only one or few specific entries of the precoding matrix - instead of choosing another fixed precoding matrix from the static codebook - it is possible to achieve a better compensation of adverse effects of the MIMO channel matrix H on data transmission. The inventive altering of the precoding matrix W_tx yields a modified precoding matrix W_tx'.

In order to determine whether an improvement for MIMO data transmission can be achieved by the inventive modification of the precoding matrix W_tx according to step 300, in the further step 310, the inventive communications device 100 determines a quality measure of a MIMO transmission associated with said modified precoding matrix W_tx'.

I.e., prior to implementing the inventive modified precoding matrix W_tx' for the actual MIMO data transmission between the devices 100, 200, the inventive communications device 100 assesses whether the modification really results in an improvement by evaluating one or more predefined quality measures.

After said step 310 of determining, the communications device 100 signals feedback information to the base station 200 depending on said determined quality measure, cf. step 320. Thus, depending on the results obtained in step 310, the base station 200 may or may not be notified of the type of modification applied to the precoding matrix W_tx by the communications device 100.

For instance, if the determination 310 of the quality measure yields a positive result, i.e. the communications device 100 judges that better MIMO data transmission performance, i.e. a higher data rate, could be achieved with the modified precoding matrix W_tx', the communications device 100 may forward details regarding the modified precoding matrix W_tx' to the base station 200 so that the base station 200 is enabled to modify the currently used precoding matrix W_tx likewise.

It is further possible to define a threshold value for deciding whether to notify the base station 200 of the results of modification 300. I.e., if the quality measure determined for the modified precoding matrix W_tx' exceeds said threshold value, the communications device 100 may conclude to notify the base station 200 of the results. The communications device 100 may also evaluate a relative measure such as a change of the quality measure to determine whether or not to notify the base station 200.

On the other hand, if the determination 310 of the quality measure yields a negative result, i.e. the communications device 100 judges that no or no substantial improvement of MIMO data transmission performance could be achieved with the modified precoding matrix W_tx', the communications device 100 may not notify the base station 200 on the procedure at all. Alternatively, the communications device 100 may also notify the base station 200 of the fact that a recent analysis of a modified precoding matrix W_tx' did not yield improved results and that it is advisable to continue MIMO data transmission with the currently used precoding matrix W_tx.

It is to be pointed out that the inventive step 300 (Figure 3) of modifying the precoding matrix does not require to modify the specific instance of said precoding matrix as it is comprised within the base station 200. The inventive communications device 100 may rather use its local copy of the precoding matrix that is currently used by the base station. This way, the inventive modification 300 does not affect an ongoing MIMO data transmission between the devices 100, 200 and no signaling between the devices is required. The inventive communications device 100 rather performs a simulation by modifying its local copy of the precoding matrix in step 300 and by assessing 310 a resulting quality measure. Simulation results, i.e. information on how to modify a precoding matrix, may later on be forwarded to the base station 200 for implementation.

The simulation of adapted precoding matrices and the determination of a related quality measure may also be triggered by the base station 200, i.e. the communications device 100 performs the corresponding steps in reaction to respective command of the base station 200. Of course, the communications device 100 may also perform the steps 300, 310, 320 periodically and/or on its own initiative.

Instead of choosing the precoding matrix as currently used for an ongoing MIMO transmission, the communications device 100 may also choose any other codebook entry, i.e. any other precoding matrix comprised within the codebook 230 employed by the base station 200, as a basis for the inventive modification process. However, the preferred embodiment of the inventive method proposes to modify an existing codebook entry, i.e. one of the predefined precoding matrices W_tx already known to both components 100, 200. This has the advantage of only requiring comparatively few signalling once a modification has to be signalled to the base station 200 for implementation to the codebook.

According to an embodiment, the communications device 100 is configured to repeat the steps of modifying 300 and determining 310 the quality measure of a MIMO transmission associated with said modified precoding matrix in order to enable an iterative adaptation and improvement of the precoding matrix W_tx or the whole codebook 130, 230, respectively.

According to a further embodiment, the quality measure determined in step 310 by the communications device 100 may e.g. comprise an estimated receive signal to interference plus noise ratio, SINR.

Figure 4 depicts a simplified functional diagram illustrating an embodiment of the inventive process of modification of a precoding matrix.

A precoding matrix W_tx, which is e.g. currently used by the base station 200 (Figure 2) for MIMO data transmission to the terminal 100, is provided to an input of the function block 400. Since the inventive modification of the precoding matrix W_tx as performed by a mobile terminal 100 is preferably conducted in the course of a simulation, a copy of the precoding matrix W_tx may be used which is local to the mobile terminal 100, i.e. comprised in the terminal's codebook 130 (Figure 1).

The function block 400 performs the inventive step 300 (Figure 3) of modifying said precoding matrix W_tx, which may e.g. performed by adding a predetermined increment to a phase and/or amplitude of one or more specific entries of the precoding matrix W_tx. Correspondingly, at the output of the modifying block 400, a modified precoding matrix W_tx' is obtained.

The modified precoding matrix W_tx' is then forwarded to a quality measure determining block 410 which determines a quality measure of the MIMO transmission associated with said modified precoding matrix W_tx'. This can e.g. be achieved by estimating a receive signal to interference plus noise ratio, SINR.

Both function blocks 400, 410 may be implemented by the processor means of the control device 120, e.g. in form of a computer program.

The estimation of the receive SINR can e.g. be performed by the following steps: the quality measure determining block 410 provides a matrix multiplication of a raw MIMO channel matrix H (Figure 2) with the modified precoding matrix W_tx' (Figure 4), which results in a product matrix P = H*W_tx', wherein the operator "*" denotes said matrix multiplication. The raw MIMO channel matrix H may be determined by the communications device 100 through measurements, for instance during receiving predetermined reference signals or reference symbols from the base station 200.

From the product matrix P, the quality measure determining block 410 derives optimal receive weights for the antenna array 110a, 110b, .. of the communications device 100 in a per se known manner. From these optimal receive weights, the quality measure determining block 410 derives an estimated SINR for the MIMO data transmission assuming that the modified precoding matrix W_tx' is used at the transmitter side, i.e. the base station 200.

The estimated SINR is preferably used as a quality measure to determine whether the inventive modification of the precoding matrix W_tx has been successful.

Thus, by implementing the functionality of the components 400, 410 explained with reference to Figure 4, the inventive communications device 100 may simulate a MIMO data transmission from base station 200 to the communications device 100, wherein said simulation is based on a modified precoding matrix W_tx' that is different from the entries of the conventional fixed codebook 130, 230.

The inventive determination 310 of the estimated SINR enables the communications device 100 to compare the currently simulated MIMO transmission with further simulated MIMO transmissions associated with different modified precoding matrices or with the currently ongoing real MIMO data transmission.

If the inventive modification of the precoding matrix leads to a significantly improved estimated SINR, the communications device 100 may notify the base station 200 of these results by said step 320 of signalling feedback information. In response to receiving such information, the base station 200 may determine to implement the modifications to its own codebook 230 for future use.

If several inventive communications devices 100 supply their respective feedback information to the base station 200, it may optimize its codebook 230 by updating respective precoding matrices W_tx in accordance with the modifications proposed by the communications devices 100. Such optimization may e.g. be performed by implementing modifications to the codebook 230 which result in an improved MIMO transmission with the plurality of mobile terminals, i.e. communications devices 100, currently served by the base station 200.

The inventive optimization process within the base station 200 may also provide a step of determining which of the modifications proposed by the mobile terminals 100 leads to a global optimum regarding overall cell throughput and/or cell edge user rate, if the mobile terminals 100 also provide information on an estimated SINR associated with the proposed modifications to the precoding matrices.

Generally, the process of modifying 300 the precoding matrix W_tx may comprise altering a single matrix entry of the precoding matrix W_tx at a time. After such isolated modification of one single matrix entry, the effect on the estimated quality measure can be assessed, cf. step 310 (Figure 3). The isolated modification of one single matrix entry at a time enables a very precise tuning of specific entries of the precoding matrix W_tx.

However, it is also possible to simultaneously alter two or even more entries of the precoding matrix W_tx in the course of step 300.

Generally, the inventive modification 300 of entries of the precoding matrix W_tx, which usually represent complex numbers, may comprise adding predetermined positive or negative increment values to the real or the imaginary component of the entry thus enabling to change an amplitude or phase. Of course, the increments may also be determined dynamically, i.e. depending on operational parameters of the components 100, 200 such as a total number of MIMO sub-channels available, a number of mobile terminals to be served by the base station 200, and the like.

Alternatively or in addition to adding predetermined amplitude and/or phase increments, the matrix entry or entries of a precoding matrix W_tx may also be modified by multiplication and/or any other suitable arithmetic operation.

The inventive modification 300 of an existing matrix element in the sense of the present invention may also comprise replacing said matrix element with a predetermined value that is independent of the current value of said matrix element. Such replacement value may be determined depending on one or more other matrix entries of the precoding matrix W_tx and/or randomly and/or according to any predetermined principle. Preferably, the further device 200 is notified of these changes, too, i.e. by the step 320 of feedback signalling.

When modifying the amplitude of entries of the precoding matrix W_tx, it is advisable to ensure that specific constraints such as a normalization of its entries with respect to a reference value are not violated.

If there are sufficient calculating resources provided at the terminal 100 or its control device 120, respectively, it is also possible to employ non-linear optimization methods, evolutionary algorithms or the like to modify the precoding matrix W_tx. The same techniques may also be applied by the base station to determine how to modify its codebook 230 depending on the input of the terminals 100.

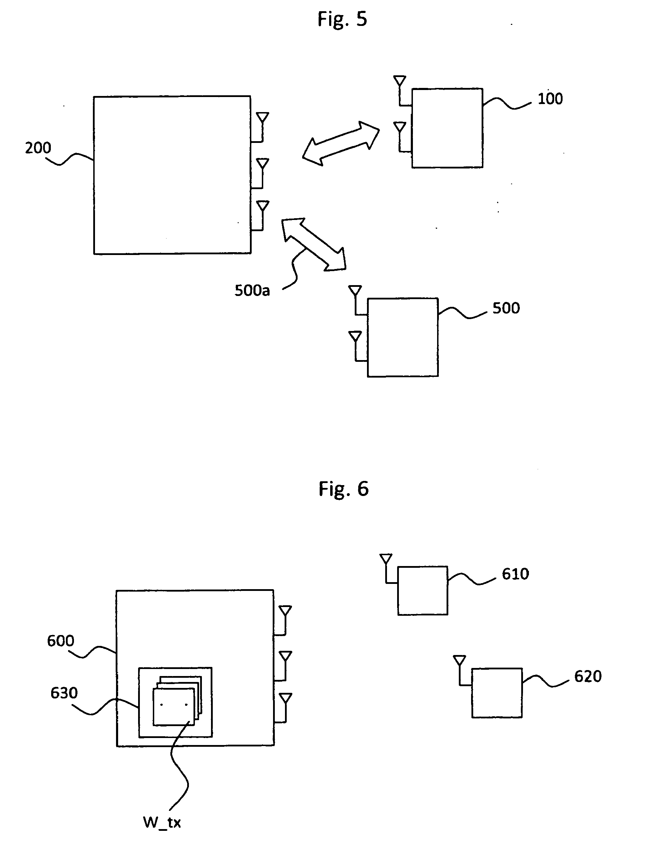

According to a further embodiment, the inventive communications device 100 is configured to determine an interference level that is caused by transmissions 500a from a base station 200 to a co-scheduled interferer 500, cf. Figure 5, which uses the same transmission resources (e.g., time and/or frequency and/or code resources) as the communications device 100.

The inventive communications device 100 is further configured to modify transmit weights of the base station 200 used for said transmissions 500a to said co-scheduled interferer 500, to determine an estimated interference level resulting from the modification of said transmit weights for said co-scheduled interferer 500, and to notify said base station 200 of said cellular communications network. For modifying the transmit weights for the co-scheduled interferer 500, the inventive communications device 100 may employ the inventive principle of iterative adaptation of a precoding matrix / the transmit weights so as to find transmit weights for the interferer 500 which effect a minimum possible interference level for the communications device 100 and its MIMO data transmission to/from the base station 200. Once determined, i.e. by simulation in analogy to the steps 300, 310 explained above, such transmit weights may be signaled by the communications device 100 to the base station 200 that implements these transmit weights. I.e., the inventive principle of adapting a codebook 130, 230 for improved MIMO transmissions between the devices 100, 200 may also be employed to determine improved transmit weights for communicating with the interferer 500 which ensure that a respective interference effect on the MIMO transmissions between the devices 100, 200 is minimized.

Figure 6 depicts a further MIMO data transmission scenario, wherein the functionality of the inventive communications device is integrated into an LTE-compatible base station 600.

The mobile terminals 610, 620 also depicted by Figure 6 are conventional LTE-compatible terminals and do not comprise functionality according to the present invention.

The inventive base station 600 is configured to modify at least one of its precoding matrices W_tx comprised in the codebook 630, to receive quality information associated with said modified precoding matrix from at least one mobile terminal 610, 620 of said cellular communications network, and to determine a quality measure by evaluating said received quality information.

In contrast to the modification of a precoding matrix as performed by the mobile terminal 100, cf. Figure 2, the inventive base station 600 may directly modify a precoding matrix W_tx that is currently in use for precoding in the course of an ongoing MIMO data transmission to one or more of the terminals 610, 620.

Thus, any inventive modification to a respective precoding matrix W_tx directly affects the quality of MIMO signals received by the terminals 610, 620.

The terminals 610, 620 may e.g. provide quality information associated with received signals in the form of an SINR value that can be calculated from data received in the downlink direction. For example, the SINR information may be comprised in so-called CQI (channel quality indicators) reports which are provided by the terminals 610, 620 according to the LTE standard. The CQI reports of the different terminals 610, 620 can be sent to the base station 600, which evaluates the data as a quality measure for the MIMO data transmissions.

If the CQI reports received from a specific terminal 610 in reaction to a modification of a respective precoding matrix W_tx by the base station 600 indicate an improvement regarding the receive SNIR at the terminal 610, the base station 600 may conclude that said modification of the precoding matrix is advantageous. Thus, the base station 600 may employ the so modified precoding matrix for future data transmissions to the terminal 610. In this case, the base station 600 preferably signals the use of the modified precoding matrix to the terminal 610.

However, if the CQI reports received from a specific terminal 610 in reaction to a modification of a respective precoding matrix W_tx by the base station 600 indicate no improvement regarding the receive SNIR at the terminal 610, the base station 600 may conclude that said modification of the precoding matrix is disadvantageous. Thus, the base station 600 may discard the so modified precoding matrix or the respective modifications to the precoding matrix W_tx. In analogy to the first aspect of the present invention, according to which a modification of a precoding matrix W_tx is performed by a mobile terminal 100, the second aspect of the present invention, which proposes the base station 600 to modify the precoding matrix W_tx, may also provide for an iterative process of repeated modification which enables a continuous adaptation, i.e. improvement of the precoding matrix W_tx or the whole codebook 630.

If the inventive functionality is implemented with LTE-compatible components, a preferred precoding matrix indicator, PMI, may be extended to signalling details regarding the inventive modification(s) to a precoding matrix W_tx. E.g., the conventional PMI or some extra bits may be used for indicating which of the several precoding matrices of the codebook 130, 230, 630 is to be modified. Likewise, some more extra bits may be defined which denote the one or more specific matrix entries to be modified according to the inventive process and the degree of modification. An LTE-compatible base station 200 may use per se known mechanisms of feed-forward signalling to notify a mobile terminal capable of performing an embodiment of the inventive method of changed codebook entries.

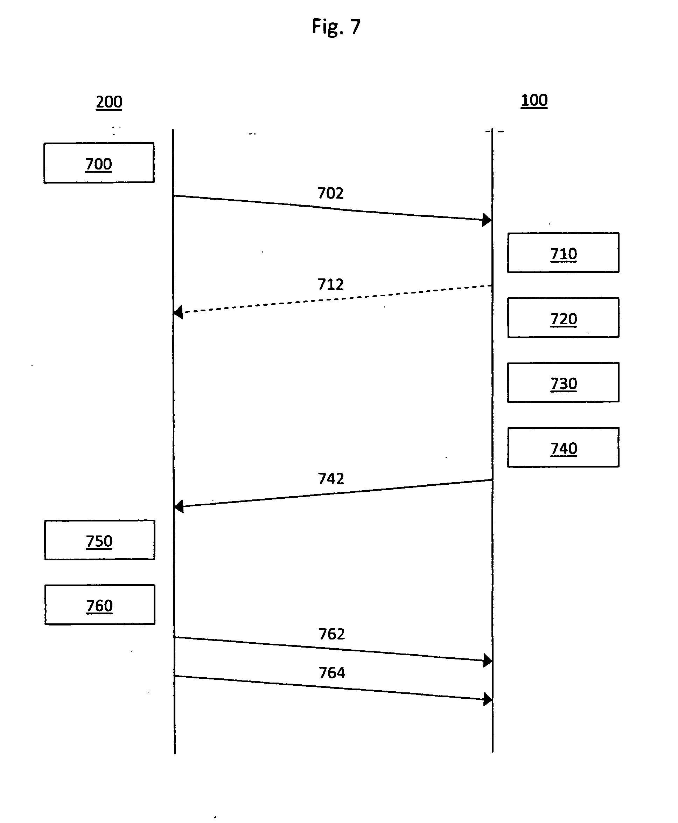

A further embodiment of the inventive method is explained below with reference to Figure 7, which depicts a communications process between the base station 200 and the mobile terminal 100 implementing the inventive functionality.

In a first step 700, the base station 200 selects one or more entries of its codebook 230 (Figure 2) which are candidates for improvement, e.g. which are supposed to enable an improved MIMO data transmission to the terminal 100 with the currently given MIMO channel matrix H.

After selecting 700, the base station 200 informs the mobile terminal 100 on the candidate entries, i.e. those precoding matrices which are supposed to offer improved MIMO data transmission, which is done by signalling a respective message 702 to the mobile terminal 100. For the further explanations it is assumed that only one specific candidate entry is signalled by message 702, although the invention is not limited in this respect. The signalling of the candidate entry can be performed in analogy to the conventional use of the PMI within LTE systems.

Apart from maintaining clarity for the description of the present embodiment, focussing on one particular candidate entry might be useful for reducing signalling overhead of the message 702.

After receiving message 702, the mobile terminal 100 may perform an analysis 710 of the candidate entry so proposed. I.e., the mobile terminal 100 may calculate an estimated receive SINR for receiving a MIMO transmission which would result from the base station 200 using the candidate entry for precoding.

As already explained above, the estimation of the receive SINR can e.g. be performed by the following steps: performing a matrix multiplication of the raw MIMO channel matrix H (Figure 2), which characterizes the current MIMO channel conditions, with the candidate entry, i.e. the precoding matrix signalled by means of the message 702,
deriving optimal receive weights for the antenna array 110a, 110b, .. of the communications device 100 depending on the matrix product of the MIMO channel matrix H and the candidate entry, deriving the estimated SINR for the MIMO data transmission from the optimal receive weights.

In the course of said analysis 710, the mobile terminal 100 may also judge, based on the estimated SINR, whether the candidate entry leads to improvements in the MIMO transmission between components 100, 200. If this is not the case, the mobile terminal 100 may discard the candidate entry and signal corresponding information to the base station 200, cf. message 712.

If the mobile terminal 100 judges that the candidate entry leads to improvements in the MIMO transmission between components 100, 200, it proceeds with the inventive modification of the precoding matrix W_tx represented by the candidate entry. The inventive modification is depicted by method step 720 of Figure 7. In the course of the inventive modification 720, the mobile terminal 100 may e.g. test one or more potential changes in the transmit weights of the candidate codebook entry.

The potential changes may comprise positive or negative increments in phase, optionally also in amplitude, to one or more matrix elements of the candidate entry.

According to a preferred embodiment, in order to keep the number of possible combinations for the inventive modifications low, e.g. each matrix element corresponding to a specific antenna element is tested with positive/and negative increments while keeping all the other weights, i.e. matrix elements, constant.

The modifications of step 720 lead to one or more modified precoding matrices W_tx' derived from the candidate entry. For each of said modified precoding matrices W_tx', corresponding optimal receive weights are calculated by the mobile terminal 100, and the resulting SINR after combining is estimated, cf. step 730.

In step 740, the mobile terminal 100 evaluates the SINR values estimated for the one or more modified precoding matrices W_tx' derived from the candidate entry. In case the SINR has improved to a certain degree, e.g. more than a certain predetermined threshold compared to the existing codebook entry that is currently used by the base station 200, this will make a codebook entry change to the respective modified precoding matrix attractive.

Hence, the mobile terminal 100 signals back potentially attractive modified precoding matrices to the base station 200 by means of the message 742. Instead of transmitting complete modified precoding matrices W_tx', it is preferred to only signal information via said message 742 that enables the base station 200 to locally build the respective modified precoding matrices W_tx' by using its fixed codebook 230 and modification information defining the modifications to fixed codebook entries performed by the mobile terminal 100.

Optionally, the message 742 may also comprise an estimated SINR or any other quality measure determined by said mobile terminal 100 for the potentially attractive modified precoding matrices. In order to reduce the amount of feedback signalling to the base station 200, the mobile terminal 100 could also only signal its best or its m-many best modified precoding matrices or corresponding modification information, respectively.

The base station 200 may not only collect information as comprised in message 742 from a single mobile terminal 100, but rather from a plurality of mobile terminals, cf. step 750.

As a result, after step 750, the base station 200 comprises information on a plurality of proposed modifications to one or more precoding matrices W_tx of its codebook 230 (Figure 2) as determined by the mobile terminals, and possibly on the associated SINR values, which are to be expected if the proposed precoding matrices are used.

The base station 200 may thus perform an optimization procedure 760 which determines whether to apply any of the proposed modifications to one or more elements of its codebook 230. If the base station 200 decides to apply any of the proposed modifications, the optimization algorithm may define which specific modifications are to be performed.

As an example, in the course of the optimization procedure 760, the base station 200 may apply such modifications to its codebook 230 which result in an improved SINR for the majority of mobile terminals 100.

As a further example, in the course of the optimization procedure 760, the base station 200 may apply such modifications to its codebook 230 which lead to the largest aggregated hypothetical throughput for all mobile terminals 100 served by the base station 200.

The base station 200 notifies the mobile terminal(s) 100 of a respective change regarding its codebook 230 by means of the message 762. Additionally, a common time trigger for applying the modified codebook 230 or a modified codebook entry W_tx' may be signalled by the base station, cf. message 764.

In the context of an LTE system, the messages 702, 712, 742, 762, 764 may be implemented by using or extending existing signalling mechanisms such as general broadcasting channels, terminal-specific signalling channels or the like.

The embodiments of the inventive method advantageously enable to gradually adapt an existing, fixed codebook 230 towards an optimized codebook that is optimally suited for compensating current MIMO channel characteristics.

As the preferred embodiment is based on existing codebooks 230, it requires comparatively few signalling to convey the modifications to precoding matrices to involved components 100, 200.

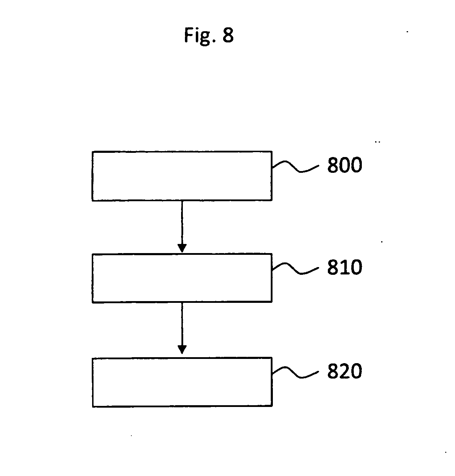

A further embodiment of the method according to the present invention is explained below with reference to Figure 8. This method is preferably used in the case of correlated calibrated antennas, where the step of precoding using a precoding matrix W_tx mainly serves beam forming purposes, i.e. to adapt the directional characteristic of the base station's antenna array.

According to this embodiment of the present invention, long-term channel state information, CSI, is used in order to adapt the base station's codebook 630 (Figure 6).

In a first step 800 (Figure 8), an uplink receive covariance matrix is calculated by the base station 600. The uplink receive covariance matrix is e.g. obtained in a per se known manner, i.e. according to E{H*H^{H}}, wherein H is the raw MIMO channel matrix, {.}^{H} is the Hermitian operation, and wherein the operator "*" denotes a matrix multiplication. According to the present embodiment, the uplink receive covariance matrix is used for modifying the codebook.

After the step of calculating 800, in step 810, the base station 600 determines the eigenvector of the uplink receive covariance matrix which is associated with the largest eigenvalue. Depending on said specific eigenvector, the base station 600 modifies a codebook entry, i.e. a specific precoding matrix W_tx of its codebook 630, which is performed in step 820.

According to a preferred embodiment, the modification 820 is done by altering one or more elements of a column vector of a specific precoding matrix W_tx so as to obtain a modified column vector that comprises a higher degree of similarity with the eigenvector obtained in step 810. This is particularly advantageous, since the eigenvectors comprise spatial direction information of the MIMO channel, and a corresponding adaptation of the codebook leads to improvements regarding the MIMO data transmission. A suitable measure for determining whether a specific modification yields the desired effect is e.g. the scalar product of the eigenvector and the modified vector. I.e., according to the preferred embodiment, one or more elements of a column vector of a specific precoding matrix W_tx are altered so as to maximize the scalar product of said column vector with the eigenvector.

A particularly efficient adaptation of the base station's codebook 630 is given by such eigenvector-dependent modifications according to step 820 which increase the scalar products of the respective column vectors of a precoding matrix and the eigenvectors of a plurality of mobile terminals 610, 620 served by the base station 600. For this purpose, the base station 600 has to evaluate a respective number of eigenvectors each of which is associated with a specific mobile terminal 610, 620 and its respective MIMO channel matrix H. Again, it is preferred to apply such changes to the codebook for future use, which result in improvements for the majority of mobile terminals.

For successfully applying the aforementioned method to frequency division duplexing, FDD, configurations, prior to the step of modifying 820, per se known frequency transformations have to be performed which take into account the duplexing distance in frequency between uplink and downlink to ensure that the uplink receive covariance matrix can be used as a basis for optimizing codebooks 630 used for precoding in downlink direction, too.

In contrast, with time division duplexing, TDD, configurations, the principle of channel-reciprocity may advantageously be employed instead of applying frequency transformations. The channel reciprocity between uplink and downlink can e.g. be exploited by evaluating short term CSI. E.g., instead of evaluating eigenvectors of the covariance matrix, the calculated instantaneous receive weights of the uplink receiver can be used in order to adapt the base station's codebook 630 for future downlink precoding.

Thus, the modification and adaptation of the codebook 630 may even be conducted without any support of mobile terminals 610, 620. I.e., it is sufficient to mainly provide the respective functionality at the base station 600. Minor adaptations of the mobile terminals 610, 620 may be required to enable an efficient signalling of modifications to the codebook 630 from the base station 600 to the mobile terminals 610, 620.

The embodiments advantageously enable to efficiently adapt existing codebooks to an actual MIMO channel condition which results in higher throughputs of MIMO data transmissions, a larger spectral efficiency and a larger cell edge rate. The adaptation may be performed continuously or periodically so as to account for changes of an antenna configuration of the involved devices 100, 200 and a changing propagation environment. The process of simulation using modified precoding matrices and/or a subsequent adaptation of the codebook may also be triggered by one of the components 100, 200 involved in the data transmission. Alternatively, the respective device may perform the simulation and/or adaptation procedure on its own initiative.

It is obvious that in the context of cellular communications networks, the inventive principle may also be employed for improving codebooks used for precoding uplink data transmissions, which e.g. may be the case with mobile terminals having a plurality of antennas.

Moreover, the inventive principle is not limited to cellular communications networks, it may rather also be employed with any other MIMO configuration such as WLAN or WiMAX devices according to the IEEE 802.11n or IEEE 802.16 standards.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Wireless communications device (100; 600) comprising a communications interface (110) configured to perform multiple-input multiple-output, MIMO, wireless data transmission with at least one further device (200), the wireless communications device (100) being **characterized by** being configured to:
- modify (300) at least one entry of a predefined precoding matrix (W_tx) which is used by said communications device (100) and/or said further device (200) to precode data for said MIMO data transmission thus obtaining a modified precoding matrix (W_tx'),
- determine (310) a quality measure (SINR) of a MIMO transmission associated with said modified precoding matrix (W_tx'), and to
- signal (320) feedback information to said further wireless communications device (200) depending on said determined quality measure.

2. Communications device (100) according to claim 1, wherein said communications device (100) is configured to alter one or more specific entries of the precoding matrix (W_tx) by adding a predetermined increment to a phase and/or amplitude of said one or more specific entries.

3. Communications device (100) according to one of the preceding claims, wherein said communications device (100) is configured to signal information related to the modification (300) of the precoding matrix (W_tx) to said further device (200) only if said determined quality measure associated with said modified precoding matrix (W_tx') exceeds a predetermined threshold value.

4. Communications device (100) according to one of the preceding claims, wherein said communications device (100) is configured to repeat the steps of modifying (300) at least one entry of a precoding matrix (W_tx) and determining (310) the quality measure of a MIMO transmission associated with said modified precoding matrix (W_tx').

5. Communications device (100) according to one of the preceding claims, wherein said communications device (100) is a mobile terminal of a cellular communications network, wherein said communications device (100) is configured to modify (300) at least one precoding matrix (W_tx) of a codebook (230) provided by a base station of said cellular communications network, and wherein said feedback information comprises at least one of information characterising the type of modification and/or information characterising the determined quality measure associated with said modification.

6. Communications device (100) according to claim 5, wherein said communications device (100) is configured to estimate a receive signal to interference plus noise ratio, SINR, depending on said modified precoding matrix (W_tx').

7. Communications device (100) according to one of the claims 5 to 6, wherein said communications device (100) is configured to determine an interference level that is caused by transmissions (500a) from a base station (200) to a co-scheduled interferer (500) which uses the same transmission resources as the communications device (100), to modify transmit weights of the base station (200) used for said transmissions (500a) to said co-scheduled interferer (500), to determine an estimated interference level resulting from the modification of said transmit weights for said co-scheduled interferer (500), and to notify the base station (200) of said cellular communications network.

8. Communications device according to one of the claims 1 to 4, wherein said communications device is a base station (600) of a cellular communications network, and wherein said communications device is configured to modify (300) at least one of its precoding matrices (W_tx), to receive quality information associated with said modified precoding matrix (W_tx') from at least one mobile terminal (610, 620) of said cellular communications network, and to determine said quality measure by evaluating said received quality information.

9. Communications device (600) according to claim 8, wherein said communications device (600) is configured to receive quality information associated with at least one modified precoding matrix (W_tx') from a plurality of mobile terminals (610, 620) and to optimize said at least one precoding matrix (W_tx) depending on said quality information.

10. Communications device (600) according to one of the claims 8 to 9, wherein said communications device (600) is configured to notify at least one mobile terminal (610, 620) of a modification to a precoding matrix (W_tx) by signalling feedback information to said mobile terminal (610, 620, 630).

11. Method of operating a wireless communications device (100; 600) comprising a communications interface (110) configured to perform multiple-input multiple-output, MIMO, wireless data transmission with at least one further device (200), the method being **characterized by** comprising the following steps:
- modifying (300) at least one entry of a predefined precoding matrix (W_tx) which is used by said communications device (100) and/or said further device (200) to precode data for said MIMO data transmission thus obtaining a modified precoding matrix (W_tx'),
- determining (310) a quality measure (SINR) of a MIMO transmission associated with said modified precoding matrix (W_tx'), and
- signalling (320) feedback information to said further wireless communications device (200) depending on said determined quality measure.

12. Method according to claim 11, wherein said communications device (100) is a mobile terminal of a cellular communications network, wherein said step of determining (310) a quality measure comprises estimating a receive signal to interference plus noise ratio, SINR, depending on said modified precoding matrix (W_tx'), and wherein said feedback information comprises at least one of information characterising the type of modification and/or information characterising the determined quality measure associated with said modification.

13. Method according to one of the claims 11 to 12, wherein said communications device (100)
- determines an interference level that is caused by a co-scheduled interferer (500) which uses the same transmission resources as the communications device (100),
- modifies transmit weights of said co-scheduled interferer (500),
- determines an estimated interference level resulting from the modification of transmit weights of said co-scheduled interferer (500), and
- notifies a base station (200) of said cellular communications network.

14. Method according to claim 11, wherein said communications device is a base station (600) of a cellular communications network, wherein said step of modifying (300) comprises modifying at least one of its precoding matrices (W_tx), wherein said step of determining (310) a quality measure comprises receiving quality information associated with said modified precoding matrix (W_tx') from at least one mobile terminal (610, 620) of said cellular communications network and evaluating said received quality information.

15. Method according to claim 14, wherein said communications device (600) receives quality information associated with at least one modified precoding matrix (W_tx') from a plurality of mobile terminals (610, 620) and optimizes said at least one precoding matrix (W_tx) depending on said quality information.

16. Method according to one of the claims 14 to 15, wherein said communications device (600) notifies at least one mobile terminal (610, 620) of a modification to a precoding matrix (W_tx) by signalling feedback information to said mobile terminal (610, 620).

17. Method according to one of the claims 14 to 16, wherein a base station's codebook (630) is adapted depending on long-term channel state information, CSI.

## Patentansprüche

1. Drahtlose Kommunikationsvorrichtung (100; 600), umfassend eine Kommunikationsschnittstelle (110), welche für das Durchführen von drahtlosen Datenübertragungen unter Nutzung mehrerer Sende- und Empfangsantennen, MIMO-Datenübertragungen, mit mindestens einer weiteren Vorrichtung (200) konfiguriert ist, wobei die drahtlose Kommunikationsvorrichtung (100) **dadurch gekennzeichnet ist, dass** sie konfiguriert ist für das:
- Ändern (300) mindestens eines Eintrags einer vordefinierten Vorcodiermatrix (W_tx), welche von der besagten Kommunikationsvorrichtung (100) und/oder der besagten weiteren Vorrichtung (200) für das Vorcodieren von Daten für die besagte MIMO-Datenübertragung benutzt wird, wodurch eine geänderte Vorcodiermatrix (W_tx') erhalten wird,
- Bestimmen (310) eines Qualitätsmaßes (SINR) einer mit der besagten geänderten Vorcodiermatrix (W_tx') assoziierten MIMO-Übertragung, und das
- Signalisieren (320) von Rückkopplungsinformationen an die besagte weitere drahtlose Kommunikationsvorrichtung (200) in Abhängigkeit von dem besagten bestimmten Qualitätsmaß.

2. Kommunikationsvorrichtung (100) nach Anspruch 1, wobei die besagte Kommunikationsvorrichtung (100) für das Ändern eines oder mehrerer spezifischer Einträge der Vorcodiermatrix (W_tx) durch Addieren eines vorbestimmten Inkrements zu einer Phase und/oder Amplitude des besagten einen oder der besagten mehreren spezifischen Einträge konfiguriert ist.

3. Kommunikationsvorrichtung (100) nach einem der vorstehenden Ansprüche, wobei die besagte Kommunikationsvorrichtung (100) dafür konfiguriert ist, die die Änderung (300) der Vorcodiermatrix (W_tx) betreffenden Informationen nur an die besagte weitere Vorrichtung (200) zu signalisieren, wenn das besagte mit der besagten geänderten Vorcodiermatrix (W_tx') assoziierte vorbestimmte Qualitätsmaß einen vorbestimmten Grenzwert überschreitet.

4. Kommunikationsvorrichtung (100) nach einem der vorstehenden Ansprüche, wobei die besagte Kommunikationsvorrichtung (100) für das Wiederholen der Schritte des Änderns (300) mindestens eines Eintrags einer Vorcodiermatrix (W_tx) und für das Bestimmen (310) des Qualitätsmaßes einer mit der besagten geänderten Vorcodiermatrix (W_tx') assoziierten MIMO-Übertragung konfiguriert ist.

5. Kommunikationsvorrichtung (100) nach einem der vorstehenden Ansprüche, wobei die besagte Kommunikationsvorrichtung (100) ein mobiles Endgerät eines zellularen Kommunikationsnetzwerk ist, wobei die besagte Kommunikationsvorrichtung (100) für das Ändern (300) mindestens einer Vorcodiermatrix (W_tx) eines von einer Basisstation des besagten zellularen Kommunikationsnetzwerks bereitgestellten Codebuchs (230) konfiguriert ist, und wobei die besagten Rückkopplungsinformationen mindestens eine Information enthalten, welche den Typ der Änderung und/oder Information, die das bestimmte mit der besagten Änderung assoziierte Qualitätsmaß kennzeichnet, kennzeichnen.

6. Kommunikationsvorrichtung (100) nach Anspruch 5, wobei die besagte Kommunikationsvorrichtung (100) für das Schätzen eines Empfangssignal-zu-Interferenz-plus-Rausch-Verhältnisses, SINR, in Abhängigkeit von der besagten geänderten Vorcodiermatrix (Wtx') konfiguriert ist.

7. Kommunikationsvorrichtung (100) nach einem der Ansprüche 5 bis 6, wobei die besagte Kommunikationsvorrichtung (100) für das Ermitteln eines von Übertragungen (500a) von einer Basisstation (200) an einen gleichzeitig geplanten Störer (500), welcher dieselben Übertragungsressourcen wie die Kommunikationsvorrichtung (100) benutzt, verursachten Störpegels, für das Ändern der für die besagten Übertragungen (500) an den besagten gleichzeitig geplanten Störer (500) benutzten Übertragungsgewichte der Basisstation (200), für das Ermitteln eines sich aus der Änderung der besagten Übertragungsgewichte für den besagten gleichzeitig geplanten Störer (500) ergebenden geschätzten Störpegels und für das Benachrichtigen der Basisstation (200) des besagten zellularen Kommunikationsnetzwerks konfiguriert ist.

8. Kommunikationsvorrichtung (100) nach einem der Ansprüche 1 bis 4, wobei die besagte Kommunikationsvorrichtung eine Basisstation (600) eines zellularen Kommunikationsnetzwerks ist, und wobei die besagte Kommunikationsvorrichtung für das Ändern (300) mindestens einer ihrer Vorcodiermatrizen (W_tx), für den Empfang von mit der besagten geänderten Vorcodiermatrix (W_tx') assoziierten Qualitätsinformationen von mindestens einem mobilen Endgerät (610, 620) des besagten zellularen Kommunikationsnetzwerks und für das Bestimmen des besagten Qualitätsmaßes durch Bewerten der besagten empfangenen Qualitätsinformationen konfiguriert ist.

9. Kommunikationsvorrichtung (600) nach Anspruch 8, wobei die besagte Kommunikationsvorrichtung (600) für den Empfang von mit mindestens einer geänderten Vorcodiermatrix (W_tx') assoziierten Qualitätsinformationen von einer Mehrzahl von mobilen Endgeräten (610, 620) und für das Optimieren der besagten mindestens einen Vorcodiermatrix (W_tx) in Abhängigkeit von den besagten Qualitätsinformationen konfiguriert ist.

10. Kommunikationsvorrichtung (600) nach einem der Ansprüche 8 bis 9, wobei die besagte Kommunikationsvorrichtung (600) für das Benachrichtigen mindestens eines mobilen Endgeräts (610, 620) über eine Änderung einer Vorcodiermatrix (Wtx) durch Signalisieren von Rückkopplungsinformationen an das besagte mobile Endgerät (610, 620, 630) konfiguriert ist.

11. Verfahren zum Betrieb einer drahtlosen Kommunikationsvorrichtung (100; 600) mit einer Kommunikationsschnittstelle (110), welche für das Durchführen von drahtlosen Datenübertragungen unter Nutzung mehrerer Sende- und Empfangsantennen, MIMO-Datenübertragungen, mit mindestens einer weiteren Vorrichtung (200) konfiguriert ist, wobei das Verfahren **dadurch gekennzeichnet ist, dass** es die folgenden Schritte umfasst:
- Ändern (300) mindestens eines Eintrags einer vordefinierten Vorcodiermatrix (W_tx), welche von der besagten Kommunikationsvorrichtung (100) und/oder der besagten weiteren Vorrichtung (200) für das Vorcodieren von Daten für die besagte MIMO-Datenübertragung benutzt wird, wodurch eine geänderte Vorcodiermatrix (W_tx') erhalten wird,
- Bestimmen (310) eines Qualitätsmaßes (SINR) einer mit der besagten geänderten Vorcodiermatrix (W_tx') assoziierten MIMO-Übertragung, und
- Signalisieren (320) von Rückkopplungsinformationen an die besagte weitere drahtlose Kommunikationsvorrichtung (200) in Abhängigkeit von dem besagten bestimmten Qualitätsmaß.

12. Verfahren nach Anspruch 11, wobei die besagte Kommunikationsvorrichtung (100) ein mobiles Endgerät eines zellularen Kommunikationsnetzwerks ist, wobei der Schritt des Bestimmens (310) eines Qualitätsmaßes das Schätzen eines Empfangssignal-zu-Interferenz-plus-Rausch-Verhältnisses, SINR, in Abhängigkeit von der besagten geränderten Vorcodiermatrix (W_tx') umfasst, und wobei die besagten Rückkopplungsinformationen mindestens entweder eine Information, welche den Typ der Änderung kennzeichnet, und/oder eine Information, welche das mit der besagten Änderung assoziierte bestimmte Qualitätsmaß kennzeichnet, umfassen.

13. Verfahren nach einem der Ansprüche 11 bis 12, wobei die besagte Kommunikationsvorrichtung (100)
- einen Störpegel ermittelt, welcher von einem gleichzeitig geplanten Störer (500), der dieselben Übertragungsressourcen benutzt wie die Kommunikationsvorrichtung (100), verursacht wird,
- die Übertragungsgewichte des besagten gleichzeitig geplanten Störer (500) ändert,
- einen geschätzten Störpegel, welcher sich aus der Änderung der Übertragungsgewichte des besagten gleichzeitig geplanten Störer (500) ergibt, ermittelt, und
- eine Basisstation (200) des besagten zellularen Kommunikationsnetzwerks benachrichtigt.

14. Verfahren nach Anspruch 11, wobei die besagte Kommunikationsvorrichtung eine Basisstation (600) eines zellularen Kommunikationsnetzwerks ist, wobei der Schritt des Änderns (300) das Ändern mindestens einer ihrer Vorcodiermatrizen (W_tx) umfasst, wobei der Schritt des Bestimmens eines Qualitätsmaßes das Empfangen von mit der besagten geänderten Vorcodiermatrix (W_tx') assoziierten Qualitätsinformationen von mindestens einem mobilen Endgerät (610, 620) des besagten zellularen Kommunikationsnetzwerks und das Bewerten der besagten empfangenen Qualitätsinformationen umfasst.

15. Verfahren nach Anspruch 14, wobei die besagte Kommunikationsvorrichtung (600) mit mindestens einer geänderten Vorcodiermatrix (W_tx') assoziierte Qualitätsinformationen von einer Mehrzahl von mobilen Endgeräten (610, 620) empfängt und die besagte mindestens eine Vorcodiermatrix (W_tx) in Abhängigkeit von den besagten Qualitätsinformationen optimiert.

16. Verfahren nach einem der Ansprüche 14 bis 15, wobei die besagte Kommunikationsvorrichtung (600) mindestens ein mobiles Endgerät (610, 620) über eine Änderung der Vorcodiermatrix (W_tx) durch Signalisieren von Rückkopplungsinformationen an das besagte mobile Endgerät (610, 620) benachrichtigt.

17. Verfahren nach einem der Ansprüche 14 bis 16, wobei das Codebuch (630) einer Basisstation in Abhängigkeit von Langzeit-Kanalzustandsinformationen, CSI, angepasst wird.

## Revendications

1. Dispositif de communications sans fil (100 ; 600) comprenant une interface de communications (110), configuré pour réaliser une transmission de données sans fil à entrée multiple sortie multiple, MIMO, avec au moins un autre dispositif (200), le dispositif de communications sans fil (100) étant **caractérisé en ce qu'**il est configuré pour :
- modifier (300) au moins une entrée d'une matrice de précodage prédéfinie (W_tx) qui est utilisée par ledit dispositif de communications (100) et/ou ledit autre dispositif (200) pour précoder les données pour ladite transmission de données MIMO afin d'obtenir une matrice de précodage modifiée (W_tx'),
- déterminer (310) une mesure de qualité (SINR) d'une transmission MIMO associée à ladite matrice de précodage modifiée (W_tx'), et pour
- signaler (320) des informations de retour audit autre dispositif de communications sans fil (200) en fonction de ladite mesure de qualité déterminée.

2. Dispositif de communications (100) selon la revendication 1, dans lequel ledit dispositif de communications (100) est configuré pour modifier une ou plusieurs entrées spécifiques de la matrice de précodage (W_tx) en ajoutant un incrément prédéterminé à une phase et/ou à une amplitude de ladite ou desdites entrées spécifiques.

3. Dispositif de communications (100) selon l'une des revendications précédentes, dans lequel ledit dispositif de communications (100) est configuré pour signaler des informations relatives à la modification (300) de la matrice de précodage (W_tx) audit autre dispositif (200) uniquement si ladite mesure de qualité déterminée associée à ladite matrice de précodage modifiée (W_tx') dépasse une valeur de seuil prédéterminée.

4. Dispositif de communications (100) selon l'une des revendications précédentes, dans lequel ledit dispositif de communications (100) est configuré pour répéter les étapes de modification (300) d'au moins une entrée d'une matrice de précodage (W_tx) et de détermination (310) de la mesure de qualité d'une transmission MIMO associée à ladite matrice de précodage modifiée (W_tx').

5. Dispositif de communications (100) selon l'une des revendications précédentes, dans lequel ledit dispositif de communications (100) est un terminal mobile d'un réseau de communications cellulaire, dans lequel ledit dispositif de communications (100) est configuré pour modifier (300) au moins une matrice de précodage (W_tx) d'un livre de codes (230) fourni par une station de base dudit réseau de communications cellulaire, et dans lequel lesdites informations de retour comprennent au moins l'une d'une information caractérisant le type de modification et/ou d'une information caractérisant la mesure de qualité déterminée associée à ladite modification.

6. Dispositif de communications (100) selon la revendication 5, dans lequel ledit dispositif de communications (100) est configuré pour estimer un rapport signal sur interférence plus bruit de réception, SINR, en fonction de ladite matrice de précodage modifiée (W_tx').

7. Dispositif de communications (100) selon l'une des revendications 5 ou 6, dans lequel ledit dispositif de communications (100) est configuré pour déterminer un niveau d'interférence provoqué par les transmissions (500a) d'une station de base (200) à un émetteur brouilleur coplanifié (500) qui utilise les mêmes ressources d'émission que le dispositif de communications (100), pour modifier les poids d'émission de la station de base (200) utilisés pour lesdites transmissions (500a) audit émetteur brouilleur coplanifié (500), pour déterminer un niveau d'interférence estimé résultant de la modification desdits poids de transmission pour ledit émetteur brouilleur coplanifé (500) et pour en notifier la station de base (200) dudit réseau de communications cellulaire.

8. Dispositif de communications selon l'une des revendications 1 à 4, dans lequel ledit dispositif de communications est une station de base (600) d'un réseau de communications cellulaire, et dans lequel ledit dispositif de communications est configuré pour modifier (300) au moins l'une de ses matrices de précodage (W_tx), pour recevoir des informations de qualité associées à ladite matrice de précodage modifiée (W_tx') depuis au moins un terminal mobile (610, 620) dudit réseau de communications cellulaire et pour déterminer ladite mesure de qualité en évaluant lesdites informations de qualité reçues.

9. Dispositif de communications (600) selon la revendication 8, dans lequel ledit dispositif de communications (600) est configuré pour recevoir des informations de qualité associées à au moins une matrice de précodage modifiée (W_tx') depuis une pluralité de terminaux mobiles (610, 620) et pour optimiser ladite au moins une matrice de précodage (W_tx) en fonction desdites informations de qualité.

10. Dispositif de communications (600) selon l'une des revendications 8 ou 9, dans lequel ledit dispositif de communications (600) est configuré pour notifier à au moins un terminal mobile (610, 620) une modification d'une matrice de précodage (W_tx) en signalant des informations de retour audit terminal mobile (610, 620, 630).

11. Procédé de fonctionnement d'un dispositif de communications sans fil (100 ; 600) comprenant une interface de communications (110), configuré pour réaliser une transmission de données sans fil à entrée multiple sortie multiple, MIMO, avec au moins un autre dispositif (200), le procédé étant **caractérisé en ce qu'**il comprend les étapes suivantes :
- modification (300) d'au moins une entrée d'une matrice de précodage prédéfinie (W_tx) qui est utilisée par ledit dispositif de communications (100) et/ou ledit autre dispositif (200) pour précoder les données pour ladite transmission de données MIMO afin d'obtenir une matrice de précodage modifiée (W_tx'),
- détermination (310) d'une mesure de qualité (SINR) d'une transmission MIMO associée à ladite matrice de précodage modifiée (W_tx'), et
- signalisation (320) d'informations de retour audit autre dispositif de communications sans fil (200) en fonction de ladite mesure de qualité déterminée.

12. Procédé selon la revendication 11, dans lequel ledit dispositif de communications (100) est un terminal mobile d'un réseau de communications cellulaire, dans lequel ladite étape de détermination (310) d'une mesure de qualité comprend l'estimation d'un rapport signal sur interférence plus bruit de réception, SINR, en fonction de ladite matrice de précodage modifiée (W_tx') et dans lequel lesdites informations de retour comprennent au moins l'une d'une information caractérisant le type de modification et/ou d'une information caractérisant la mesure de qualité déterminée associée à ladite modification.

13. Procédé selon l'une des revendications 11 ou 12, dans lequel ledit dispositif de communications (100)
- détermine un niveau d'interférence provoqué par un émetteur brouilleur coplanifié (500) qui utilise les mêmes ressources de transmission que le dispositif de communications (100),
- modifie les poids de transmission dudit émetteur brouilleur coplanifié (500),
- détermine un niveau d'interférence estimé résultant de la modification des poids de transmission dudit émetteur brouilleur coplanifié (500), et
- en notifie une station de base (200) dudit réseau de communications cellulaire.

14. Procédé selon la revendication 11, dans lequel ledit dispositif de communications est une station de base (600) d'un réseau de communications cellulaire, dans lequel ladite étape de modification (300) comprend la modification d'au moins l'une de ses matrices de précodage (W_tx), dans lequel ladite étape de détermination (310) d'une mesure de qualité comprend la réception d'informations de qualité associées à ladite matrice de précodage modifiée (W_tx') depuis au moins un terminal mobile (610, 620) dudit réseau de communications cellulaire et l'évaluation desdites informations de qualité reçues.

15. Procédé selon la revendication 14, dans lequel ledit dispositif de communications (600) reçoit des informations de qualité associées à au moins une matrice de précodage modifiée (W_tx') depuis une pluralité de terminaux mobiles (610, 620) et optimise ladite au moins une matrice de précodage (W_tx) en fonction desdites informations de qualité.

16. Procédé selon l'une des revendications 14 ou 15, dans lequel ledit dispositif de communications (600) notifie à au moins un terminal mobile (610, 620) une modification d'une matrice de précodage (W_tx) en signalant des informations de retour audit terminal mobile (610, 620, 630).

17. Procédé selon l'une des revendications 14 à 16, dans lequel un livre de code de la station de base (630) est adapté en fonction d'informations à long terme sur l'état des canaux, CSI.
